(19) Europäisches Patentamt
European Patent Office
Office européen des brevets

(11) **EP 3 646 279 B1**

(12) **EUROPÄISCHE PATENTSCHRIFT**

(45) Veröffentlichungstag und Bekanntmachung des Hinweises auf die Patenterteilung:
**10.05.2023 Patentblatt 2023/19**

(21) Anmeldenummer: **18753127.2**

(22) Anmeldetag: **03.08.2018**

(51) Internationale Patentklassifikation (IPC):
**G06Q 10/06** (2023.01) **G06Q 50/04** (2012.01)
**G06N 5/00** (2023.01) **G05B 19/418** (2006.01)

(52) Gemeinsame Patentklassifikation (CPC):
**G06Q 50/04; G05B 19/41865; G06N 5/01; G06Q 10/06315; Y02P 90/02; Y02P 90/30**

(86) Internationale Anmeldenummer:
**PCT/EP2018/071147**

(87) Internationale Veröffentlichungsnummer:
**WO 2019/025594 (07.02.2019 Gazette 2019/06)**

(54) **VERFAHREN ZUR PRODUKTIONSPLANUNG**

METHOD FOR PRODUCTION PLANNING

PROCÉDÉ DE PLANIFICATION DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2017 DE 102017213583**

(43) Veröffentlichungstag der Anmeldung:
**06.05.2020 Patentblatt 2020/19**

(73) Patentinhaber: **Siemens Aktiengesellschaft**
**80333 München (DE)**

(72) Erfinder:
• **LAMPARTER, Steffen**
**85622 Feldkirchen (DE)**
• **LOSKYLL, Matthias**
**92318 Neumarkt (DE)**

(74) Vertreter: **Siemens Patent Attorneys**
**Postfach 22 16 34**
**80506 München (DE)**

(56) Entgegenhaltungen:
WO-A1-2016/074730      DE-A1-102015 116 569
DE-A1-102015 205 173   DE-A1-102016 002 194
US-A1- 2010 138 017

• **ADAMSON GÖRAN ET AL: "Feature-based control and information framework for adaptive and distributed manufacturing in cyber physical systems", JOURNAL OF MANUFACTURING SYSTEMS, SOCIETY OF MANUFACTURING ENGINEERS, DEARBORN, MI, US, vol. 43, 23 December 2016 (2016-12-23), pages 305-315, XP029994427, ISSN: 0278-6125, DOI: 10.1016/J.JMSY.2016.12.003**
• **ANIS ANAS ET AL: "A comparison of modeling approaches for planning in Cyber Physical Production Systems", PROCEEDINGS OF THE 2014 IEEE EMERGING TECHNOLOGY AND FACTORY AUTOMATION (ETFA), IEEE, 16 September 2014 (2014-09-16), pages 1-8, XP032718770, DOI: 10.1109/ETFA.2014.7005189 [retrieved on 2015-01-08]**

**Beschreibung**

Die Erfindung betrifft ein Verfahren zur Produktionsplanung mittels einer Mehrzahl von Fertigungseinrichtungen, bei welchem Aufgaben eines Arbeitsplans mit Fertigungsfähigkeiten der Fertigungseinrichtungen einem Vergleich unterzogen werden und bei welchem der Vergleich mittels eines Produktionsleitsystems durchgeführt wird.

Bei einer neuen Produktgestaltung wird regelmäßig ein Produktmodell, etwa ein CAD-Modell und eine Stückliste, sowie eine Abfolge von Fertigungsschritten, etwa in der Gestalt eines Arbeitsplans, bestimmt.

In der nachfolgenden Produktionsplanung wird der konkrete Fertigungsprozess basierend auf der vorhandenen Ausstattung und der Anlagenspezifikation definiert, etwa mittels einer Beschreibung oder Abbildungsstruktur mBOP. Da die Produktionsplanung von der verfügbaren Ausstattung abhängt, muss dieses Verfahren für jede Fertigungsanlage wiederholt werden.

Heute wird der Fertigungsprozess manuell für jede Fertigungsanlage geplant. Aufgrund des dafür erforderlichen hohen Zeitaufwands ist die Markteinführungszeit für neue Produkte lang und die Fertigung unflexibel. Allerdings sind gerade diese beiden Ziele - eine kurze Markteinführungszeit und eine hohe Flexibilität - relevant für viele aktuelle Markttrends wie etwa Auftragsfertigungen oder Fertigungsdienstleistungen.

Im Industrie-4.0-Kontext sind "Plug-and-Produce"-Konzepte bekannt, welche eine flexiblere Produktionsplanung erlauben. Diese Konzepte basieren auf zwei grundsätzlichen Ansätzen:
Einerseits wird auf eine zentrale Planung abgestellt: Eine zentrale Planungslogik basiert auf Aufgabenbeschreibungen oder Zielbeschreibungen und gleicht diese mit Fähigkeitsbeschreibung von Maschinen und Gerätschaften auf Fertigungslevel ab. Allerdings können die Fähigkeiten von Maschinen häufig nicht vollständig als deklarative Beschreibung ausgedrückt werden. Insbesondere gilt dies für komplexere Maschinen.

Adam Göran et al. beschreiben in "Feature-based control and information framework for adaptive and distributed manufacturing in cyber physical systems" (Journal of Manufacturing Systems, Society of Manufacturing Engineers, Dearborn, MI, US, Bd. 43, 23. Dezember 2016 (2016-12-23), Seiten 305-315, XP029994427, ISSN: 0278-6125, DOI: 10.1016/J.JMSY.2016.12.003) ein Verfahren zum Ressourcen-Aufgaben-Matching in verteilten und kollaborativen Fertigungsumgebungen.

Andererseits bestehen dezentralisierte Ansätze: Solche Ansätze erfordern den Einsatz ausschließlich intelligenter Maschinen, welche selbst Planungsfähigkeiten aufweisen müssen.

Allerdings bleiben koordinierende Funktionen erforderlich, welche häufig zu suboptimalen Lösungen führen und einen zusätzlichen Kommunikationsaufwand bedingen.

Es ist folglich Aufgabe der Erfindung, ein Verfahren zu entwickeln, welches eine verbesserte Produktionsplanung, insbesondere eine flexible Produktionsplanung, erlaubt und welches zweckmäßig mit verschieden-granularen Fähigkeitsbeschreibungen sowie mit Maschinen mit unterschiedlicher Komplexität umgehen kann. Diese Aufgabe der Erfindung wird mit einem Verfahren mit den in Anspruch 1 angegebenen Merkmalen sowie mit einem Computerprogrammprodukt mit den in Anspruch 5 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren ist ein Verfahren zur Produktionsplanung mittels einer Mehrzahl von Fertigungseinrichtungen. Bei dem erfindungsgemäßen Verfahren werden Aufgaben eines Arbeitsplans mit Fertigungsfähigkeiten der Fertigungseinrichtungen einem Vergleich unterzogen und es wird oder werden bei dem erfindungsgemäßen Verfahren abhängig von dem oder den Ergebnis/sen des Vergleichs jeweils mindestens eine oder mehrere Fertigungseinrichtung/en zum Abgleich ihrer Fertigungsfähigkeit/en mit der/den Aufgabe/n beauftragt. Bei dem erfindungsgemäßen Verfahren wird anhand der Ergebnisse des Vergleichs und des Abgleichs die Produktionsplanung festgehalten. Das Verfahren ist computerimplementiert oder es wird computergestützt oder computerbasiert ausgeführt.

Erfindungsgemäß lässt sich also situationsabhängig eine zentrale Produktionsplanung auf der Grundlage von Fähigkeitsbeschreibungen mit einer dezentralen Produktionsplanung auf Ebene einzelner Fertigungseinrichtungen einer Fertigungsanlage verknüpfen. Ein hierarchischer Ansatz vermeidet die Nachteile, welche mit einer zentralen Produktionsplanung oder mit einer dezentralen Produktionsplanung verbunden sind.

Die Erfindung erlaubt also eine situationsabhängige Produktionsplanung in einem Produktionsleitsystem (engl.: "Manufacturing Execution System", MES). Die Produktionsplanung hängt von dem oder den Ergebnis/sen des Vergleichs der Beschreibung der Aufgaben des Arbeitsplans (also gewissermaßen produktzentriert) mit der Beschreibung der Fertigungsfähigkeiten (also gewissermaßen anlagenzentriert) sowie von den jeweiligen Planungsalgorithmen ab. Bei dem erfindungsgemäßen Verfahren erfolgt der Vergleich nicht oder zumindest nicht nur syntaktisch, sondern insbesondere semantisch, d.h. mittels semantischen Vergleichs der jeweiligen Beschreibung der Aufgabe/n mit der jeweiligen Beschreibung der Fertigungsfähigkeit/en. Ein wesentlicher Gedanke der Erfindung ist die situationsabhängige Entscheidung, ob die zentrale Planung basierend auf der Beschreibung der Aufgaben genügt oder ob eine dezentrale Produktionsplanung auf der Ebene der Fertigungseinheiten, etwa Maschinen, erfolgen muss. Mittels des erfindungsgemäßen Verfahrens ist ein Kernproblem bei der flexiblen Produktionsplanung lösbar, nämlich die Überbrückung der Distanz zwischen der sehr abstrakten Aufgabenbeschreibung, etwa auf der Ebene des Produktionsleitsystems, und der Fähigkeitsbeschreibung auf Maschinenebene, welche häufig nicht mit der notwendigen Granularität beschrieben werden können, etwa weil Parameter nicht verfügbar sind.

Bei dem erfindungsgemäßen Verfahren wird/werden eine oder mehrere Fertigungseinrichtung/en dann zum Abgleich beauftragt, wenn zu mindestens einer Aufgabe des Arbeitsplans keine der Fertigungseinrichtungen zumindest eine zuordbare Fertigungsfähigkeit aufweist, also dann, wenn der Beschreibung der zumindest einen Aufgabe des Arbeitsplans keine Beschreibung einer Fertigungsfähigkeit einer Fertigungseinrichtung zugeordnet werden kann. Ein solcher Fall kann etwa dann auftreten, wenn Fähigkeitsbeschreibungen von Fertigungseinrichtungen nicht hinreichend granular oder hinreichend vollständig vorliegen oder Fähigkeitsbeschreibungen nicht vollständig ohne Rückgriff auf ein konkret zu fertigendes Produkt oder einen konkret erforderten Fertigungsgang spezifiziert werden können.

Bei dem erfindungsgemäßen Verfahren erfolgt der Vergleich und/oder der Abgleich semantisch und/oder mittels logischer Ausdrücke, insbesondere mittels einer Beschreibungslogik und/oder einer Prädikatenlogik erster Stufe und/oder eines multi-attributiven Vergleichs und/oder mittels eines constraint-basierten Vergleichs, insbesondere mittels Lösens eines Bedingungserfüllungs-Problems (CSP = (engl.) *"Constraint-Satisfaction Problem"*).

Zweckmäßig erfolgt ein semantischer Vergleich insbesondere mittels "Complex Semantic Matchings" (s. vorzugsweise S. Grimm, B. Motik, C. Preist: "Matching Semantic Service Descriptions with Local Closed-World Reasoning", ESWC 2006, S. 575-589 und/oder Noia, Tommaso Di et al.: "A system for principled matchmaking in an electronic marketplace", International Journal of Electronic Commerce 8.4 (2004), S. 9-37).

Vorzugsweise werden für diesen semantischen Vergleich bei dem erfindungsgemäßen Verfahren Fähigkeitsbeschreibungen und/oder Aufgabenbeschreibungen und/oder Kontextbeschreibungen herangezogen, welche logische Ausdrücke, insbesondere Beschreibungslogik, und/oder Prädikatenlogik, vorzugsweise zumindest erster Stufe, umfassen.

Alternativ oder zusätzlich kann ein semantischer Vergleich mittels multi-attributiven Vergleichs (engl.: *"multi-attributive matching"*) (s. insbesondere Veit, Daniel: "Matchmaking in electronic markets: An agent-based approach towards matchmaking in electronic negotiations", Vol. 2882, Springer Science & Business Media, 2003) erfolgen, wobei Aufgabenbeschreibung/en und/oder Fähigkeitsbeschreibung/en und/oder zumindest eine oder mehrere vorzugsweise herangezogene Kontextbeschreibung/en Listen von Attributen umfassen und wobei zweckmäßig für einen, mehrere oder jeden Typ von Attributen eine eigene Vergleichsfunktion vorgesehen ist, die insbesondere eine semantische Vergleichsfunktion und/oder Zeichenkettenoperation und/oder mathematische Gleichung umfasst.

Vorzugsweise wird zum Abgleich bei dem erfindungsgemäßen Verfahren der jeweiligen Fertigungseinrichtung eine Beschreibung der Aufgabe/n und vorzugsweise zumindest eine ggf. vorhandene Kontextbeschreibung übermittelt. Beim Abgleich wird zweckmäßig zumindest eine lokale, d.h. insbesondere eine auf die jeweilige Fertigungseinrichtung bezogene, Abgleichfunktion ausgewertet, welche logische Werte, vorzugsweise *"wahr"* und/oder *"falsch"* und/oder *"unbekannt"* repräsentierend, annehmen kann. Bevorzugt wird zum Abgleich zumindest eine interne Simulation und/oder zumindest eine Bewegungsplanung und/oder zumindest ein sonstiger Planungsalgorithmus herangezogen. Vorteilhaft wird, sofern die jeweilige Fertigungseinrichtung eine fehlende Fähigkeitsbeschreibung ergänzen kann, diese Ergänzung als Ergebnis des Verfahrens ausgegeben.

Bei dem erfindungsgemäßen Verfahren erfolgt im Falle mindestens eines nicht-positiven Abgleichs zu zumindest einer Fertigungsfähigkeit zweckmäßig ein manueller Abgleich. In dieser Weiterbildung der Erfindung wird also nicht notwendigerweise allein auf einen automatisierten Abgleich abgestellt, sondern eine individuelle Kontrolle des automatisierten Verfahrens bleibt in dieser Weiterbildung möglich.

Bei dem Verfahren gemäß der Erfindung wird vorzugsweise dann, wenn der Vergleich ergibt, dass sämtlichen Aufgaben des Arbeitsplans Fertigungsfähigkeiten der Fertigungseinrichtungen in einer Zuordnung zuordenbar sind, das Ergebnis dieses Vergleichs und/oder die Zuordnung als ein Ergebnis des Verfahrens festgehalten.

Bei einer vorteilhaften Weiterbildung des erfindungsgemäßen Verfahrens wird dann, wenn mehr Fertigungsfähigkeiten zur Verfügung stehen als vom Arbeitsplan gefordert, der Arbeitsplan des Produkts verfeinert. In dieser Weiterbildung der Erfindung kann also die Zuordnung von Fertigungsfähigkeiten zum Arbeitsplan optimiert werden, indem die Fertigungsfähigkeiten dem verfeinerten Arbeitsplan angepasst werden.

Bei dem erfindungsgemäßen Verfahren wird der Vergleich zweckmäßig mittels eines Produktionsleitsystems durchgeführt.

Bei dem Verfahren gemäß der Erfindung wird bevorzugt ein Ergebnis des Abgleichs an das Produktionsleitsystem übermittelt.

Das erfindungsgemäße Computerprogrammprodukt zur Produktionsplanung ist zur Ausführung eines Verfahrens wie vorhergehend beschrieben ausgebildet.

Die bislang bekannten Lösungen hingegen beruhen entweder auf einer zentralisierten oder dezentralisierten Produktionsplanung, aber nicht auf einer situationsabhängigen Kombination dieser beiden Ansätze, etwa abhängig von einem Detailliertheitsgrad der Fähigkeitsbeschreibungen der Fertigungseinrichtungen.

Nachfolgend wird die Erfindung anhand in der Zeichnung dargestellter Ausführungsbeispiele näher erläutert. Es zeigen:

Fig. 1     ein Ablaufdiagramm eines ersten Ausführungsbeispiels des erfindungsgemäßen Verfahrens in einer Prinzipskizze sowie

Fig. 2     eine Systemarchitektur umfassend das Ausführungsbeispiel gem. Fig. 1 schematisch in einer Prinzipskizze.

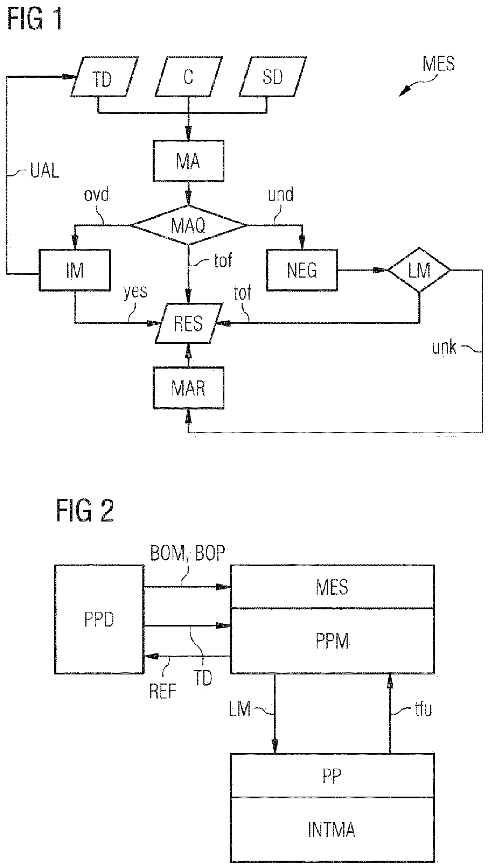

Das in Fig. 1 dargestellte Ausführungsbeispiel des erfindungsgemäßen Verfahrens zeigt einen Ablaufplan eines Produktionsleitsystems MES einer nicht explizit in der Zeichnung dargestellten Fertigungsanlage. Die Fertigungsanlage umfasst eine Vielzahl von Fertigungseinrichtungen. Die jeweiligen Fertigungseinrichtungen weisen Fertigungsfähigkeiten zur Fertigung von Produkten auf. Die Fertigungsfähigkeiten der Fertigungseinrichtungen sind in einer Fähigkeitsbeschreibung SD festgehalten. Das Produktionsleitsystem MES enthält einen Arbeitsplan, der Aufgabenbeschreibungen TD umfasst, welche die Fertigungsanlage zur Fertigung eines bestimmten Produktes ausführen muss. Zusätzlich zu den Aufgabenbeschreibungen TD umfasst der Arbeitsplan auch Kontextbeschreibungen C zu den Aufgabenbeschreibungen. Die Kontextbeschreibungen C umfassen den technischen Kontext der jeweiligen Aufgabe, beispielsweise den zeitlichen Bezug zu vorhergehenden Aufgaben oder nachfolgenden Aufgaben des Arbeitsplans. In weiteren, nicht eigens dargestellten Ausführungsbeispielen, welche im Übrigen dem dargestellten entsprechen, können die Kontextbeschreibungen C ersatzlos entfallen.

Um den Fertigungsprozess zu planen, muss das Produktionsleitsystem MES die Aufgabenbeschreibungen TD und die Fähigkeitsbeschreibungen SD miteinander vergleichen.

Ein solcher Vergleich MA kann grundsätzlich auf verschiedene Arten erfolgen:
Im dargestellten Ausführungsbeispiel erfolgt ein Vergleich MA mittels "Complex Semantic Matchings" (s. etwa S. Grimm, B. Motik, C. Preist: "Matching Semantic Service Descriptions with Local Closed-World Reasoning", ESWC 2006, S. 575-589 und Noia, Tommaso Di et al.: "A system for principled matchmaking in an electronic marketplace", International Journal of Electronic Commerce 8.4 (2004), S. 9-37), wobei die Fähigkeitsbeschreibungen und die Aufgabenbeschreibungen und die Kontextbeschreibungen mittels logischer Ausdrücke, beispielsweise mittels Beschreibungslogik oder mittels Prädikatenlogik erster Stufe vorliegen.

In weiteren Ausführungsbeispielen kann stattdessen oder zusätzlich ein Vergleich MA auch mittels multi-attributiven Vergleichs (engl.: "*multi-attributive matching*")(s. etwa Veit, Daniel: "Matchmaking in electronic markets: An agent-based approach towards matchmaking in electronic negotiations", Vol. 2882, Springer Science & Business Media, 2003) erfolgen, wobei die Aufgabenbeschreibungen und die Fähigkeitsbeschreibungen und die Kontextbeschreibungen Listen von Attributen sind und für jeden Typ von Attributen eine eigene Vergleichsfunktion definiert ist, die beispielsweise als semantische Vergleichsfunktion und/oder als Zeichenkettenoperation und/oder als mathematische Gleichung ausgestaltet ist.

Ein Beispiel in der Art eines Pseudocodes für eine multi-attributive Fähigkeitsbeschreibung SD bildet eine Fähigkeitsbeschreibung eines Roboterarms, der eine Fertigungseinrichtung bildet:

```
{ Fähigkeit: "Pick & Place"
 Freiheitsgrade: 6 (Zahl)
 Nutzlast: 0 bis 3 Kilogramm }.
```

Darüber hinaus kann die multi-attributive Beschreibung noch weitere Angaben zum Roboter-Arm enthalten, etwa Seriennummern, Hersteller, Typenbezeichnungen etc.

Die Aufgabenbeschreibung TD, hier als Pseudocode veranschaulicht, lautet beispielsweise:

```
{ Stücklänge: 200 Millimeter
 Stückmasse: 0.5 Kilogramm
 Aufgabe: Transport }.
```

Der multi-attributive Vergleich MA ordnet jedem relevanten Attribut-Paar einen semantischen Ausdruck zu. Der semantische Vergleich wird für jedes Paar von Aufgabe und Fertigungsfähigkeit durchgeführt. Dazu wird Hintergrundwissen herangezogen, welches formal die Beziehung zwischen Ausdrücken buchhält. Beispielsweise wird für Verarbeitungsfunktionen eine Wissensbasis herangezogen, welche zwei Funktionen und eine Relation zwischen diesen Funktionen definiert:

$$\text{Wissensbasis} = \{\text{Transport, Pick-and-place, Pick-and-place} \subseteq \text{Transport}\}.$$

Aufgrund des mittels der Wissensbasis bereitgehaltenen Wissens kann geschlossen werden, dass die Funktion Pick-and-place eine spezielle Ausprägung der allgemeinen Funktion Transport ist. Auf diese Weise kann eine Übereinstimmung von Aufgabe und Fertigungsfähigkeit festgestellt werden.

Anstelle einer oder sämtlicher oder zusätzlich zu einer oder beiden der zuvor genannten Arten des Vergleichs MA kann ein Vergleich MA auch mittels constraint-basierten Vergleichs (engl.: "constraint-based matching") erfolgen, wobei in diesem Falle der Vergleich erfolgt, indem ein Bedingungserfüllungs-Problems (CSP = (engl.) "Constraint-Satisfaction Problem") gelöst wird.

Der Vergleich MA kann in unterschiedlichen Ergebnissen MAQ resultieren:

Falls sämtlichen Aufgabenbeschreibungen TD des Arbeitsplans passende Fähigkeitsbeschreibungen SD der Fertigungseinrichtung der Fertigungsanlage gegenüberstehen, so ist das Ergebnis MAQ des Vergleichs MA "wahr".

Sofern eine Aufgabenbeschreibung TD und eine Fähigkeitsbeschreibung SD der Fertigungseinrichtungen der Fertigungsanlage nicht zusammenpassen, so ist das Ergebnis MAQ des Vergleichs MA "falsch".

Sofern zu jeder Aufgabenbeschreibung TD eine passende Fähigkeitsbeschreibung SD existiert, aber über die Anzahl an Aufgabenbeschreibungen TD hinaus noch zusätzliche Fähigkeitsbeschreibungen SD vorliegen, zu denen keine Aufgabenbeschreibung TD zugeordnet ist, so ist das Ergebnis MAQ des Vergleichs MA "überbestimmt" ovd.

Entsprechend ist das Ergebnis MAQ des Vergleichs MA "unterbestimmt" und, wenn zwar zu jeder Fähigkeitsbeschreibung SD eine passende Aufgabenbeschreibung TD existiert, aber über die Anzahl an Fähigkeitsbeschreibungen SD hinaus noch zusätzliche Aufgabenbeschreibungen TD vorliegen, zu denen keine Fähigkeitsbeschreibung SD zugeordnet ist.

Wenn das Ergebnis MAQ des Vergleichs MA "wahr" oder "falsch" ist, so wird das Ergebnis MAQ des Vergleichs MA mittels der Ausgabe tof als Resultat RES ausgegeben.

Im Falle dass das Ergebnis MAQ des Vergleichs MA "überbestimmt" ovd ist, wird eine unvollständige Übereinstimmung IM festgestellt. In diesem Falle wird entweder gefordert, dass der Arbeitsplan mittels einer Aktualisierung UAL verfeinert wird, sodass aufgrund der so angepassten Aufgabenbeschreibungen TD ein Ergebnis MAQ als "wahr" oder "falsch" erhalten kann. Oder aber es wird festgelegt, dass die zugeordneten Fähigkeitsbeschreibungen SD stets kompatibel mit der entsprechenden Aufgabenbeschreibung TD sind, sodass bei unvollständiger Übereinstimmung IM das Ergebnis MAQ "wahr" oder "falsch" stets allein aus der bestehenden unvollständigen Übereinstimmung IM abgeleitet werden kann. In diesem Falle wird das Ergebnis MAQ ebenfalls wie oben beschreiben mittels der Ausgabe tof als Resultat RES an den Produktionsplanungsingenieur kommuniziert.

Im Falle, dass das Ergebnis MAQ des Vergleichs MA "unterbestimmt" und ist, d.h. es Aufgabenbeschreibungen TD, denen aufgrund der vorliegenden Daten keine Fähigkeitsbeschreibung SD zugeordnet werden kann, so sind die Fähigkeitsbeschreibungen SD der Fertigungseinrichtungen möglicherweise nicht hinreichend granular bekannt oder hinreichend vollständig spezifiziert um das Ergebnis MAQ des Vergleichs MA abschließend als "wahr" oder falsch zu bestimmen.

Folglich werden die Fertigungseinrichtungen mit einem Abgleich NEG beauftragt, um ihre Tauglichkeit für die Aufgabenbeschreibung TD mit der Aufgabenbeschreibung TD abzugleichen. Dies wird typischerweise insbesondere für komplexe und flexible Fertigungseinrichtungen der Fall sein, bei welchen die Fähigkeitsbeschreibung nicht vollständig ohne Rückgriff auf das konkret zu fertigende Produkt oder auf den konkret erforderten Fertigungsgang spezifiziert werden kann, beispielsweise bei Robotern oder bei Werkzeugmaschinen.

Zum Abgleich NEG wird der jeweiligen Fertigungseinrichtung die Aufgabenbeschreibung TD und die ggf. vorhandene Kontextbeschreibung C übermittelt. Zum Abgleich wird eine lokale, d.h. auf die jeweilige Fertigungseinrichtung bezogene, Abgleichfunktion LM ausgewertet, welche die Werte "wahr" oder "falsch" oder "unbekannt" unk annehmen kann. Die Abgleichfunktion LM zieht beispielsweise interne Simulationen oder Bewegungsplanungen oder sonstige Planungsalgorithmen heran. Sofern die Fertigungseinrichtung die fehlende Fähigkeitsbeschreibung ergänzen und somit ein Ergebnis "wahr" oder "falsch" der Abgleichfunktion LM bestimmen kann, so wird dieses Ergebnis mittels der Ausgabe tof als Ergebnis RES des Verfahrens ausgegeben. Falls jedoch die Abgleichfunktion LM trotz des Abgleichs in einem Ergebnis "unbekannt" unk resultiert, so wird eine manuelle Auflösung MAR angestoßen.

Hinsichtlich einer unvollständigen Übereinstimmung IM kann standardmäßig angenommen werden, dass eine Aufgabenbeschreibung TD vollständig ist und alle zusätzlichen Fähigkeitsbeschreibungen SD, welche nicht in Übereinstimmung mit der Aufgabenbeschreibung TD gebracht werden können, ignoriert werden. Somit kann ein Ergebnis MAQ "wahr" unmittelbar erhalten werden und mittels der Ausgabe yes als Resultat an den Produktionsplanungsingenieur kommuniziert werden. Um die ignorierten Fähigkeits-Attribute transparent buchzuhalten werden diese in eine Voraussetzungsliste eingetragen, die regelmäßig mit einem Update UAL aktualisiert wird. Diese Voraussetzungsliste kann später herangezogen werden um die Produktspezifikation und den Arbeitsplan zu detaillieren.

Die globale Systemarchitektur ist in Fig. 2 gezeigt:

Das Produktionsleitsystem MES erhält die Aufgabenbeschreibungen TD aus dem Arbeitsplan BOP und der Stückliste BOM. Arbeitsplan BOP und Stückliste BOM entstammen ihrerseits dem Produktionsplan/der Produktspezifikation PPD.

Auf der Ebene des Produktionsleitsystems MES werden die Aufgabenbeschreibungen TD mit den Fähigkeitsbeschreibungen SD mittels einer Vergleichseinheit PPM verglichen. Im Falle unvollständiger Übereinstimmungen IM wird einzelnen Fertigungseinrichtungen INTMA der Abgleich von Fähigkeitsbeschreibung SD und Aufgabenbeschreibung TD übertragen, welchen die Fertigungseinrichtung INTMA mittels einer Abgleicheinrichtung PP der Fertigungseinrichtung INTMA vornimmt. Die Fertigungseinrichtung INTMA gibt das Ergebnis des Abgleichs mittels der Abgleichfunktion LM an das Produktionsleitsystem MES zurück.

Das Produktionsleitsystem MES passt ggf. anhand der Ergebnissse MAQ des Vergleichs MA mittels der Vergleichseinheit PPM den Produktionsplan/die Produktspezifikation PPD an.

## Patentansprüche

1. Verfahren zur Produktionsplanung mittels einer Mehrzahl von Fertigungseinrichtungen (INTMA), bei welchem Aufgaben (TD) eines Arbeitsplans(BOP) mit Fertigungsfähigkeiten (SD) der Fertigungseinrichtungen (INTMA) einem Vergleich (MA) unterzogen werden und bei welchem der Vergleich (MA) mittels eines Produktionsleitsystems (MES) durchgeführt wird und bei welchem der Vergleich semantischund/oder mittels Beschreibungslogik und/oder Prädikatenlogik erster Stufe und/oder Multi-attributiven Vergleichs und/oder mittels constraint-basierten Vergleichs, insbesondere mittels Lösens eines Constraint-Satisfaction-Problems, erfolgt und bei welchem abhängig von dem oder den Ergebnis/sen (MAQ) des Vergleichs (MA) jeweils mindestens eine oder mehrere Fertigungseinrichtung/en (INTMA) dann zum Abgleich (NEG) ihrer Fertigungsfähigkeit/en (SD) mit der/den Aufgabe/n (TD) beauftragt wird/werden, wenn zu mindestens einer Aufgabe (TD) des Arbeitsplans keine der Fertigungseinrichtungen (INTMA) zumindest eine Fertigungsfähigkeit (SD) aufweist und bei welchem beim Abgleich der jeweiligen Fertigungseinrichtung eine Beschreibung der Aufgabe/n und/oder eine ggf. vorhandene Kontextbeschreibung übermittelt wird und/oder zumindest eine interne Simulationen und/oder zumindest eine Bewegungsplanung und/oder zumindest ein Planungsalgorithmus herangezogen wird und bei welchem ein Ergebnis des Abgleichs (NEG) an das Produktionsleitsystem (MES) übermittelt wird.

2. Verfahren nach dem vorhergehenden Anspruch, bei welchem der Vergleich derart semantisch erfolgt, dass er mittels semantischen Vergleichs einer Beschreibung einer oder mehrerer Aufgabe/n mit einer Beschreibung einer oder mehrerer Fertigungsfähigkeit/en erfolgt.

3. Verfahren nach einem der vorhergehenden Ansprüche, bei welchem im Falle mindestens eines nicht-positiven Abgleichs (NEG) zu zumindest einer Fertigungsfähigkeit (SD) ein manueller Abgleich erfolgt.

4. Verfahren nach einem der vorhergehenden Ansprüche, bei welchem dann, wenn mehr Fertigungsfähigkeiten (SD) zur Verfügung stehen als vom Arbeitsplan (BOP) gefordert der Arbeitsplan (BOP) des Produkts verfeinert wird.

5. Computerprogrammprodukt zur Produktionsplanung, welches zur Ausführung eines Verfahrens nach einem der vorhergehenden Ansprüche ausgebildet ist.

## Claims

1. Method for production planning by means of a plurality of manufacturing devices (INTMA), in which tasks (TD) of a work plan (BOP) are subjected to a comparison (MA) with manufacturing capabilities (SD) of the manufacturing devices (INTMA) and in which the comparison (MA) is performed by means of a production control system (MES) and in which the comparison is effected semantically and/or by means of description logic and/or first-level predicate logic and/or multiattributive comparison and/or by means of constraint-based comparison, in particular by solving a constraint satisfaction problem, and in which the result/results (MAQ) of the comparison (MA) is/are respectively taken as a basis for instructing at least one or more manufacturing device/devices (INTMA) to match (NEG) its/their manufacturing capability/capabilities (SD) with the task/tasks (TD) if none of the manufacturing devices (INTMA) has at least one manufacturing capability (SD) for at least one task (TD) of the work plan and in which the matching involves a description of the task/tasks and/or a context description that may be present being transmitted to the respective manufacturing device and/or at least one internal simulation and/or at least one movement planning and/or at least one planning algorithm being used and in which a result of the matching (NEG) is transmitted to the production control system (MES).

2. Method according to the preceding claim, in which the comparison is effected semantically in such a way that it is effected by means of semantic comparison of a description of one or more task/tasks with a description of one or more manufacturing capability/capabilities.

**3.** Method according to either of the preceding claims, in which manual matching is effected in the event of at least one nonpositive matching (NEG) for at least one manufacturing capability (SD).

**4.** Method according to one of the preceding claims, in which if more manufacturing capabilities (SD) are available than required by the work plan (BOP), the work plan (BOP) for the product is refined.

**5.** Computer program product for production planning, designed to carry out a method according to one of the preceding claims.

**Revendications**

**1.** Procédé de planification de la production à l'aide d'une pluralité d'installations de fabrication (INTMA), dans lequel les tâches (TD) d'un plan de travail (BOP) sont soumises à une comparaison (MA) avec les capacités de fabrication (SD) des installations de fabrication (INTMA) et dans lequel la comparaison (MA) est soumise à un système de contrôle de production (MES) et dans lequel la comparaison est effectuée sémantiquement et/ou au moyen d'une logique de description et/ou d'une logique de prédicat de premier niveau et/ou d'une comparaison multi-attributs et/ou d'une comparaison basée sur des contraintes, notamment en résolvant un problème de satisfaction de contraintes, et dans lequel en fonction du ou des résultats (MAQ) de la comparaison (MA) au moins une ou plusieurs installations de fabrication (INTMA) sont chargées de comparer (NEG) leur(s) capacité(s) de fabrication (SD) avec la (les) tâche(s) (TD) si aucune des installations de fabrication (INTMA) ne dispose d'au moins une capacité de fabrication (SD) pour au moins une tâche (TD) du plan de travail et dans lequel une description de la ou des tâches et/ou une description du contexte éventuellement présent est transmise lors de la comparaison de l'installation de fabrication respective et/ou au moins une simulation interne et/ou au moins une planification de mouvement et/ou au moins un algorithme de planification sont utilisés et dans lequel un résultat de la comparaison (NEG) est transmis au système de contrôle de production (MES).

**2.** Procédé selon la revendication précédente, dans lequel la comparaison est effectuée sémantiquement de telle manière qu'elle est effectuée au moyen d'une comparaison sémantique d'une description d'une ou plusieurs tâches avec une description d'une ou plusieurs capacités de fabrication.

**3.** Procédé selon l'une des revendications précédentes, dans lequel une comparaison manuelle est effectuée dans le cas d'au moins une comparaison non positive (NEG) pour au moins une capacité de fabrication (SD).

**4.** Procédé selon l'une des revendications précédentes, dans lequel si plus de capacités de fabrication (SD) sont disponibles que requises par le plan de travail (BOP), le plan de travail (BOP) du produit est affiné.

**5.** Produit programme informatique pour la planification de la production, qui est conçu pour exécuter un procédé selon l'une des revendications précédentes.

FIG 1

TD    C    SD

MES

UAL

MA

ovd                    und

MAQ

IM          tof          NEG          LM

yes        tof

RES

unk

MAR

FIG 2

BOM, BOP

PPD                    MES

                       PPM

REF    TD

LM                     tfu

PP

INTMA

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Feature-based control and information framework for adaptive and distributed manufacturing in cyber physical systems. **ADAM GÖRAN et al.** Journal of Manufacturing Systems. Society of Manufacturing Engineers, 23. Dezember 2016, vol. 43, 305-315
- **S. GRIMM ; B. MOTIK ; C. PREIST.** Matching Semantic Service Descriptions with Local Closed-World Reasoning. *ESWC,* 2006, 575-589
- **NOIA, TOMMASO DI et al.** A system for principled matchmaking in an electronic marketplace. *International Journal of Electronic Commerce,* 2004, vol. 8 (4), 9-37
- **VEIT, DANIEL.** Matchmaking in electronic markets: An agent-based approach towards matchmaking in electronic negotiations. Springer Science & Business Media, 2003, vol. 2882